(19) **Europäisches Patentamt / European Patent Office / Office européen des brevets**

(11) **EP 4 100 264 B1**

(12) **FASCICULE DE BREVET EUROPEEN**

(45) Date de publication et mention
de la délivrance du brevet:
**06.03.2024 Bulletin 2024/10**

(21) Numéro de dépôt: **21706350.2**

(22) Date de dépôt: **28.01.2021**

(51) Classification Internationale des Brevets (IPC):
**B60C 9/00** *(2006.01)*  **B60C 9/08** *(2006.01)*
**B60C 9/04** *(2006.01)*

(52) Classification Coopérative des Brevets (CPC):
**B60C 9/08; B60C 9/0042; B60C 9/005;**
B60C 2009/0425; B60C 2009/0433;
B60C 2009/0441; B60C 2009/045;
B60C 2009/0458; B60C 2009/0466;
B60C 2009/0475; B60C 2200/08

(86) Numéro de dépôt international:
**PCT/FR2021/050152**

(87) Numéro de publication internationale:
**WO 2021/156558 (12.08.2021 Gazette 2021/32)**

(54) **PNEUMATIQUE POUR VÉHICULE AGRICOLE COMPRENANT UN ÉLÉMENT DE RENFORT DE CARCASSE HYBRIDE**

LUFTREIFEN FÜR EIN LANDWIRTSCHAFTLICHES FAHRZEUG MIT EINEM HYBRIDEN KARKASSENVERSTÄRKUNGSELEMENT

TYRE FOR AN AGRICULTURAL VEHICLE, COMPRISING A HYBRID CARCASS REINFORCING ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2020 FR 2001169**

(43) Date de publication de la demande:
**14.12.2022 Bulletin 2022/50**

(73) Titulaire: **COMPAGNIE GENERALE DES ETABLISSEMENTS MICHELIN**
**63000 Clermont-Ferrand (FR)**

(72) Inventeurs:
• **RIH, Sabrina**
**63040 CLERMONT-FERRAND Cedex 9 (FR)**

• **CORNILLE, Richard**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
EP-A1- 1 431 076      EP-A1- 2 147 804
EP-A1- 3 365 187      EP-A2- 1 800 901
EP-A2- 2 444 259      WO-A1-02/085646
JP-A- 2009 091 713    US-A1- 2013 098 518
US-A1- 2013 146 199

**EP 4 100 264 B1**

**EP 4 100 264 B1**

**Description**

L'invention concerne un pneumatique pour véhicule agricole.

On connait de l'état de la technique un pneumatique pour véhicule agricole commercialisé sous la marque MICHELIN et appartenant à la gamme AxioBib et présentant des caractéristiques dimensionnelles suivantes : 710/70R42. Un tel pneumatique comprend deux bourrelets comportant chacun au moins une structure annulaire de renfort et une armature de carcasse ancrée dans chacun des bourrelets par un retournement autour de la structure annulaire de renfort. L'armature de carcasse comprend trois nappes de carcasse comprenant chacune plusieurs éléments de renfort de carcasse. Chaque élément de renfort de carcasse comprend un assemblage constitué de deux brins multifilamentaires de polyester enroulés ensemble en hélice l'un autour de l'autre.

Le pneumatique pour véhicule agricole est obtenu par un procédé comprenant une étape de fabrication de chaque nappe de carcasse dans laquelle on noie les éléments de renfort de carcasse adhérisés dans une composition polymérique pour former chaque nappe de carcasse crue.

Un tel pneumatique de l'état de la technique, de par l'utilisation du PET et du nombre de nappes de carcasse est difficile à fabriquer en raison d'une conformabilité à cru perfectible et des trois nappes de carcasse. En effet, l'armature de carcasse doit permettre, grâce à des propriétés à cru, une expansion radiale et donc, un allongement circonférentiel du pneumatique de façon à ne pas empêcher les déformations radiales et circonférentielles imposées au pneumatique lors de son procédé de fabrication. Les déformations radiales et circonférentielles sont appliquées lors de la cuisson du pneumatique durant laquelle le pneumatique est expansé radialement et circonférentiellement, par exemple par mise sous pression d'une membrane de gonflage, de façon à être plaqué contre les surfaces du moule de cuisson. Ces déformations sont particulièrement importantes en agricole du fait de la grande hauteur des sculptures du pneumatique qu'il faut mouler.

Et d'autre part, ce même pneumatique de l'état de la technique présente, de par l'utilisation du PET une rigidité de dérive largement perfectible. En effet, cette problématique est particulièrement importante dans le cas des pneumatiques pour véhicules agricoles qui en fonctionnement sont faiblement gonflés pour diminuer la compaction des sols meubles en champ.

Des pneumatiques pour véhicules agricoles connus sont divulgués dans les documents US 2013/098518 A et EP 2147804 A.

L'invention a pour but un pneumatique pour véhicule agricole permettant de déployer des efforts importants en traction en :

- améliorant la capacité à conformer à cru, et
- en améliorant la rigidité de dérive,
  tout en garantissant les mêmes performances par rapport à un pneumatique de l'état de la technique à savoir la résistance à l'éclatement du pneumatique.

A cet effet, l'invention a pour objet un pneumatique présentant un diamètre nominal de jante tel que défini par l'ETRTO compris entre 24 et 54 pouces bornes incluses et un rapport nominal d'aspect tel que défini par l'ETRTO compris entre 0, 7 et 0,9 bornes incluses pour véhicule agricole comprenant deux bourrelets comportant chacun au moins une structure annulaire de renfort et une armature de carcasse ancrée dans chacun des bourrelets par un retournement autour de la structure annulaire de renfort, l'armature de carcasse comprend au moins une nappe de carcasse comprenant un ou plusieurs éléments de renfort de carcasse, chaque élément de renfort de carcasse comprend :

- un assemblage constitué de deux brins multifilamentaires de polyamide aromatique ou copolyamide aromatique, et d'un unique brin multifilamentaire de polyamide aliphatique, les brins étant enroulés ensemble en hélice pour former une couche ; ou
- un assemblage constitué d'un unique brin multifilamentaire de polyamide aromatique ou copolyamide aromatique, et d'un unique brin multifilamentaire de polyamide aliphatique,

les brins étant enroulés ensemble en hélice l'un autour de l'autre ; ou

- une âme constituée d'un premier brin multifilamentaire de polyamide aliphatique, et une couche comprenant au moins deux deuxièmes brins multifilamentaires de polyamide aromatique ou copolyamide aromatique, les deuxièmes brins de la couche étant enroulés ensemble en hélice autour de l'âme ;
  dans lequel le pneumatique est obtenu par un procédé comprenant une étape de fabrication de chaque nappe de carcasse dans laquelle on noie le ou les éléments de renfort de carcasse adhérisé(s) dans une composition polymérique pour former chaque nappe de carcasse crue, le rapport du module tangent à la force équivalente développée par la nappe crue à 7 % d'allongement sur le module sécant à la force équivalente développée par la nappe crue à 1% d'allongement est supérieur ou égal à 2,00, les modules tangent et sécant étant obtenus à partir d'une courbe force-allongement obtenue en appliquant la norme ASTM D 885/D 885M-10a de 2014 ; dans lequel la densité d'éléments de renfort de carcasse dans la nappe de carcasse crue va de 50 à 150 éléments de renfort de carcasse par décimètre de nappe de carcasse crue et ; dans lequel chaque élément de renfort de carcasse fait un angle de 85° à 95° avec la direction circonférentielle Z du pneumatique.

Ainsi, d'une part, l'utilisation d'un élément de renfort de carcasse hybride comprenant un assemblage d'un ou deux brins multifilamentaires en polyamide aromatique ou copolyamide aromatique et d'un brin multifilamentaire en polyamide aliphatique va permettre d'abaisser le module sécant à la force équivalente développée par la nappe crue à 1% d'allongement rapporté à la force à rupture de la nappe de carcasse par rapport à celui du pneumatique de l'état de la technique et va permettre ainsi une meilleure conformation à cru du pneumatique.

Et, d'autre part, l'utilisation de cet élément de renfort de carcasse hybride va permettre d'avoir un module tangent à la force équivalente développée par la nappe crue à 7 % d'allongement rapporté à la force à rupture de la nappe de carcasse relativement élevé par rapport à celui du pneumatique de l'état de la technique ce qui va améliorer considérablement la rigidité de dérive.

Ainsi, au-dessus de la valeur sélectionnée du rapport du module tangent à la force équivalente développée par la nappe crue à 7 % d'allongement sur module sécant à la force équivalente développée par la nappe crue à 1% d'allongement, la nappe de carcasse hybride du pneumatique selon l'invention va améliorer sa conformation à cru et sa rigidité de dérive par rapport au pneumatique de l'état de la technique tout en garantissant les mêmes performances que ce dernier à savoir la résistance à l'éclatement du pneumatique.

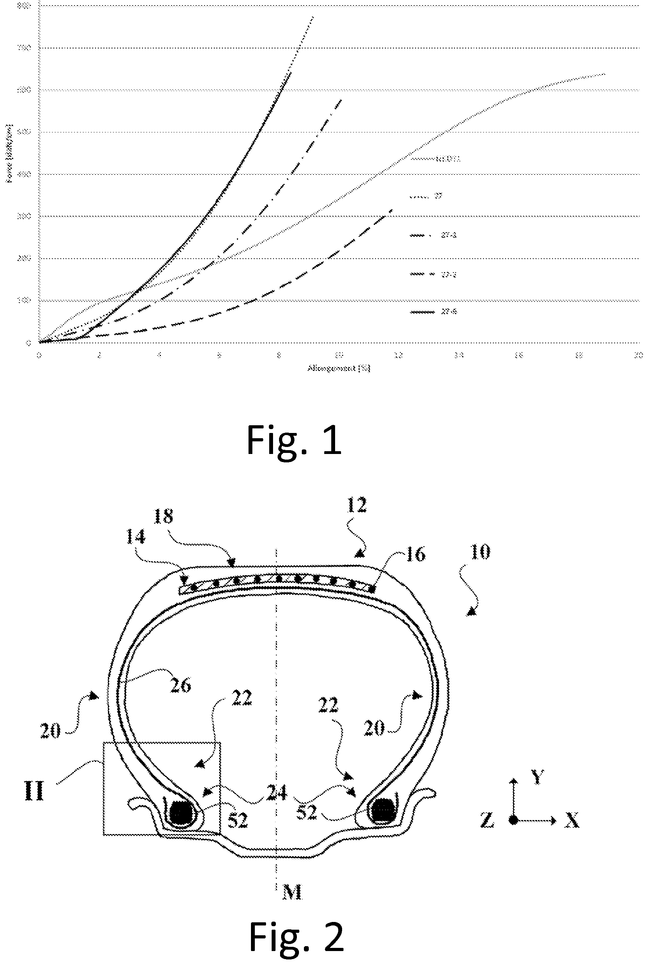

On a représenté sur la figure 1, une courbe force-allongement de nappes de carcasse crues comprenant des éléments de renfort de carcasse du pneumatique de l'état de la technique et des nappes de carcasses crues d'éléments de renfort du pneumatique selon l'invention. Cette courbe est représentative de ce qui se passe dans le pneumatique agricole lors de sa conformation lorsque la nappe de carcasse est peu sollicitée, c'est-à-dire aux faibles déformations, et aux plus fortes sollicitations en traction de la nappe de carcasse lors du roulage du pneumatique, c'est-à-dire aux forts allongements. Un effet d'utiliser un élément de renfort hybride comprenant un assemblage de monofilaments en polyamide aromatique ou copolyamide aromatique et de monofilaments en polyamide aliphatique est d'obtenir une courbe bi module, c'est-à-dire qui présente un module relativement faible aux faibles déformations et un module relativement élevé aux fortes déformations. En effet, d'une part, la nappe de carcasse crue présente un module relativement faible aux faibles déformations, en l'espèce piloté par celui du brin de polyamide aliphatique, qui permet une bonne conformation du pneumatique. D'autre part, la nappe de carcasse crue présente un module relativement élevé aux fortes déformations, en l'espèce piloté par celui du ou des brin(s) de polyamide aromatique ou copolyamide aromatique, qui va permettre d'améliorer la rigidité de dérive du pneumatique aux fortes sollicitations.

Par filament en polyamide aromatique ou copolyamide aromatique, on rappelle de manière bien connue qu'il s'agit d'un filament de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les méta-aramides (ou poly(métaphénylène isophtalamide ou PA MPD-I notamment connu sous la dénomination commerciale Nomex de la société Du Pont de Nemours) ou les para-aramides (ou poly(paraphénylène téréphtalamide ou PA PPD-T notamment connu sous la dénomination commerciale Kevlar de la société Du Pont de Nemours ou Twaron de la société Teijin).

Par filament en polyamide aliphatique, on entend un filament de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

Un élément de renfort écru est tel que le ou les matériaux constituants l'élément de renfort sont issus de fabrication sans qu'aucun revêtement ayant une fonction d'adhésion ne vienne recouvrir ce ou ces matériaux. Ainsi, un élément de renfort écru peut être nu, c'est-à-dire que le ou les matériaux constituants l'élément de renfort ne sont revêtus d'aucun revêtement ou bien éventuellement être ensimé, c'est-à-dire revêtu d'une composition d'ensimage ayant notamment pour fonctions de faciliter le glissement du ou des matériaux constituant l'élément de renfort lors de son procédé de fabrication et d'éviter l'accumulation des charges électrostatiques.

Par élément de renfort de carcasse adhérisé, on entend que lors de la fabrication de l'élément de renfort de carcasse, l'assemblage constitué des brins multifilamentaires constituant l'élément de renfort de carcasse est recouvert d'un revêtement ayant une fonction d'adhésion.

Ainsi, dans un premier mode de réalisation, on assemble les brins multifilamentaires de façon à former l'élément de renfort de carcasse écru, on revêt l'élément filaire de renfort de carcasse écru d'une couche externe d'une composition adhésive thermoréticulable et on traite thermiquement l'élément de renfort de carcasse écru revêtu de la couche externe de façon à réticuler la composition adhésive pour obtenir l'élément de renfort de carcasse adhérisé.

Dans un deuxième mode de réalisation, on revêt l'élément de renfort de carcasse écru d'une couche intermédiaire d'une première composition adhésive thermoréticulable, on traite thermiquement l'élément de renfort de carcasse écru revêtu de la couche intermédiaire de façon à réticuler la première composition adhésive pour obtenir un élément de renfort de carcasse pré-adhérisé, on revêt l'élément de renfort de carcasse pré-adhérisé d'une couche externe d'une deuxième composition adhésive thermoréticulable et on traite thermiquement l'élément de renfort de carcasse pré-adhérisé revêtu de la couche externe de façon à réticuler la deuxième composition adhésive pour obtenir l'élément de renfort de carcasse adhérisé.

Dans un mode de réalisation avantageux, ce revêtement est une composition adhésive. Une telle composition adhésive est par exemple de type RFL (acronyme pour Résorcinol-Formaldéhyde-Latex).

Par nappe de carcasse crue, on entend le composite formé lorsque l'on noie le ou les éléments de renfort de carcasse adhérisé(s) dans la composition polymérique. En d'autres termes, c'est le composite avant la conformation du pneumatique pour former la nappe de carcasse et dans lequel la composition polymérique n'est pas encore réticulée.

Par composition polymérique, on entend une composition comprenant au moins un élastomère, de préférence diénique, par exemple du caoutchouc naturel, une charge renforçante, par exemple du noir de carbone et/ou de la silice et un système de réticulation, par exemple un système de vulcanisation, de préférence comprenant du soufre.

Par module sécant à la force équivalente développée par la nappe crue à 1% d'allongement, on entend la pente de la droite reliant l'origine de la courbe Force-Allongement obtenue dans les conditions de la norme ASTM D 885/D 885M - 10a de 2014 au point d'abscisse 1% de cette même courbe, qui intervient juste après une prétension standard de 0,5 cN/tex de l'élément de renfort de carcasse. Dans le cas de l'élément filaire textile de renfort adhérisé, le module sécant est mesuré directement avant l'étape de noyage de l'élément filaire textile de renfort de carcasse dans la nappe de carcasse, c'est-à-dire sans qu'aucune autre étape ne modifiant les propriétés de module sécant n'ait lieu entre sa dernière étape de traitement thermique et l'étape de noyage. Le module sécant mesuré avant l'étape de fabrication de la nappe de carcasse est ainsi mesuré postérieurement à une ou plusieurs étapes de revêtement d'un élément filaire textile de renfort écru par une ou plusieurs couches d'une ou plusieurs compositions adhésives thermoréticulables et postérieurement à une ou plusieurs étapes de traitement thermique de l'élément filaire textile de renfort écru revêtu d'une ou plusieurs couches de façon à réticuler la ou les compositions adhésives pour obtenir l'élément filaire textile de renfort adhérisé.

Par module tangent à la force équivalente développée par la nappe crue à 7 % d'allongement, on entend le module tangent en calculant la dérivée de la courbe Force-Allongement obtenue à partir d'une courbe force-allongement obtenue en appliquant la norme ASTM D 885/D 885M - 10a de 2014 à 7% d'allongement. Dans le cas de l'élément filaire textile de renfort adhérisé, le module tangent est mesuré directement avant l'étape de noyage de l'élément filaire textile de renfort de carcasse dans la nappe de carcasse, c'est-à-dire sans qu'aucune autre étape ne modifiant les propriétés de module tangent n'ait lieu entre sa dernière étape de traitement thermique et l'étape de noyage. Le module tangent mesuré avant l'étape de fabrication de la nappe de carcasse est ainsi mesuré postérieurement à une ou plusieurs étapes de revêtement d'un élément filaire textile de renfort écru par une ou plusieurs couches d'une ou plusieurs compositions adhésives thermoréticulables et postérieurement à une ou plusieurs étapes de traitement thermique de l'élément filaire textile de renfort écru revêtu d'une ou plusieurs couches de façon à réticuler la ou les compositions adhésives pour obtenir l'élément filaire textile de renfort adhérisé.

Avantageusement, le procédé, après l'étape de noyage, comprend une étape de pose de la nappe de carcasse de façon à former une surface sensiblement cylindrique de révolution autour d'un axe, puis, une étape de conformation de la nappe de carcasse durant laquelle on écarte radialement à l'axe de la nappe de carcasse et on allonge circonférentiellement au moins une partie de la nappe de carcasse.

Dans un mode de réalisation avantageux, le ou les éléments de renfort de carcasse adhérisé(s) de la nappe de carcasse crue, avant l'étape de pose et de conformation, s'étendent parallèlement les uns aux autres.

Avantageusement, le rapport du module tangent à la force équivalente développée par la nappe crue à 7 % d'allongement sur le module sécant à la force équivalente développée par la nappe crue à 1% d'allongement est inférieur ou égal à 30,00, de préférence inférieur ou égal à 27,00 et plus préférentiellement inférieur ou égal à 24,00.

Ainsi, sur cette plage de rapport de modules allant de 2,00 à 30,00, le pneumatique va avoir une bonne conformabilité et une rigidité de dérive améliorée.

Avantageusement, le rapport du module sécant à la force équivalente développée par la nappe crue à 1% d'allongement sur la force à rupture de la nappe de carcasse crue est inférieur strictement à 7,00, de préférence inférieur ou égal à 5,00 et plus préférentiellement inférieur ou égal à 4,00.

Avantageusement, le rapport du module sécant à la force équivalente développée par la nappe crue à 1% d'allongement sur la force à rupture de la nappe de carcasse crue est supérieur ou égal à 0,50.

Ainsi, dans cet intervalle de rapport de module sécant à la force équivalente développée par la nappe crue à 1% d'allongement sur la force à rupture de la nappe de carcasse, le module aux faibles déformations est abaissé par rapport à celui de l'élément de renfort de carcasse de l'état de la technique comprenant deux brins de polyester du fait de la présence dans l'hybride du brin de polyamide aliphatique qui permet d'inverser le sens de courbure de la courbe force allongement de la nappe de carcasse crue par rapport à celui de la nappe de carcasse crue de l'état de la technique et donc, d'abaisser le module permettant ainsi une bonne conformation du pneumatique. L'homme du métier saura choisir un rapport du module sécant à la force équivalente développée par la nappe crue à 1% d'allongement sur la force à rupture de la nappe de carcasse crue suffisamment élevé de façon à faciliter la pose de la nappe crue en pneumatique.

Avantageusement, le rapport du module tangent à la force équivalente développée par la nappe crue à 7 % d'allongement sur la force à rupture de la nappe de carcasse crue est supérieur strictement à 6,00 et de préférence supérieur ou égal à 7,00.

Avantageusement, le rapport du module tangent à la force équivalente développée par la nappe crue à 7 % d'allongement sur la force à rupture de la nappe de carcasse crue est inférieur ou égal à 30,00, de préférence inférieur ou égal à 25,00 et plus préférentiellement inférieur ou égal à 22,00.

Ainsi, dans cet intervalle de rapport de module tangent à la force équivalente développée par la nappe crue à 7 % d'allongement sur la force à rupture de la nappe de carcasse, le module aux fortes déformations est relativement élevé par rapport à celui de la nappe de carcasse crue de l'état de la technique comprenant deux brins de polyester du fait de la présence de l'hybride qui permet d'améliorer considérablement la rigidité de dérive. Aux fortes déformations, le pneumatique selon l'invention se met en dérive. Le rapport du module tangent à la force équivalente développée par la nappe crue à 7 % d'allongement sur la force à rupture de la nappe de carcasse crue doit être suffisamment élevé pour que sous l'effort, le pneumatique ne se déforme pas trop mais fasse tourner le véhicule.

Par équilibré en torsions, dans les premier et deuxième modes de réalisation de l'invention, on comprend que les brins multifilamentaires sont enroulés avec une torsion sensiblement identique et que la torsion des monofilaments de chaque brin multifilamentaire dans l'assemblage final est sensiblement nulle. En effet, le procédé de fabrication de ces éléments de renforts de carcasse, bien connu de l'état de la technique, comprend une première étape durant laquelle, chaque filé de monofilaments (en anglais « yarn ») est tout d'abord individuellement tordu sur lui-même (selon une torsion initiale R1', R2', R3' avec R1'=R2'=R3') dans une direction donnée D'=D1'=D2'=D3' (respectivement sens S ou Z, selon une nomenclature reconnue désignant l'orientation des spires selon la barre transversale d'un S ou d'un Z), pour former un brin ou surtors (en anglais « strand ») dans lequel les monofilaments se voient imposer une déformation en hélice autour de l'axe du brin. Puis, au cours d'une seconde étape, les brins, sont ensuite retordus ensemble selon une torsion finale R4 telle que R4=R1 '=R2'=R3' en direction D4 opposée à la direction D'=D1'=D2'=D3' (respectivement sens Z ou S), pour l'obtention de l'élément de renfort (en anglais « cord »). Cet élément de renfort est alors dit équilibré en torsion car les monofilaments des brins présentent, dans l'élément de renfort final, la même torsion résiduelle car R1'=R2'=R3' et que cette torsion résiduelle est nulle ou sensiblement nulle car R4=R1'=R2'=R3' et la direction D'=D1'=D2'=D3' est opposée à la direction D4. Par torsion résiduelle sensiblement nulle, on entend que la torsion résiduelle est strictement inférieure à 2,5% de la torsion R4.

## Premier mode de réalisation de l'invention

Avantageusement, le pneumatique selon un premier mode de réalisation, comprend au moins une nappe de carcasse comprenant un ou plusieurs éléments de renfort de carcasse, le ou chaque élément de renfort de carcasse comprend un assemblage constitué de:

- deux brins multifilamentaire de polyamide aromatique ou copolyamide aromatique, et
- un brin multifilamentaire de polyamide aliphatique;

les brins étant enroulés ensemble en hélice pour former une couche.

Par assemblage constitué, on entend que l'assemblage ne comprend pas d'autre brin multifilamentaire que les deux brins multifilamentaires de polyamide aromatique ou copolyamide aromatique et de polyamide aliphatique.

Avantageusement, l'élément de renfort de carcasse est équilibré en torsions.

Avantageusement, le rapport du module tangent à la force équivalente développée par la nappe crue à 7 % d'allongement sur le module sécant à la force équivalente développée par la nappe crue à 1% d'allongement est supérieur ou égal à 4,00.

Avantageusement, le rapport du module tangent à la force équivalente développée par la nappe crue à 7 % d'allongement sur le module sécant à la force équivalente développée par la nappe crue à 1% d'allongement est inférieur ou égal à 10,00, de préférence inférieur ou égal à 7,00 et plus préférentiellement inférieur ou égal à 5,00.

Avantageusement, le module sécant à la force équivalente développée par la nappe crue à 1% d'allongement sur la force à rupture de la nappe de carcasse crue est inférieur ou égal à 5,00 et de préférence inférieur ou égale à 4,00.

Avantageusement, le module sécant à la force équivalente développée par la nappe crue à 1% d'allongement sur la force à rupture de la nappe de carcasse crue est supérieur ou égal à 1,00, de préférence supérieur ou égal à 2,00 et plus préférentiellement supérieur ou égal à 3,00.

Avantageusement, le module tangent à la force équivalente développée par la nappe crue à 7 % d'allongement sur la force à rupture de la nappe de carcasse crue est supérieur ou égal à 8,00, de préférence supérieur ou égal à 10,00 et préférentiellement supérieur ou égal à 13,00.

Avantageusement, le module tangent à la force équivalente développée par la nappe crue à 7 % d'allongement sur la force à rupture de la nappe de carcasse crue est inférieur ou égal à 18,00 et de préférence inférieur ou égal à 17,00.

### Deuxième mode de réalisation de l'invention

Avantageusement, le pneumatique selon un deuxième mode de réalisation comprend au moins une nappe de carcasse comprenant un ou plusieurs éléments de renfort de carcasse, le ou chaque élément de renfort de carcasse comprend un assemblage constitué de:

- un brin multifilamentaire de polyamide aromatique ou copolyamide aromatique, et
- un brin multifilamentaire de polyamide aliphatique;

les deux brins sont enroulés ensemble en hélice l'un autour de l'autre.

Avantageusement, l'élément de renfort de carcasse est équilibré en torsions.

Le brin multifilamentaire de polyamide aromatique ou copolyamide aromatique et le brin multifilamentaire de polyamide aliphatique sont assemblés ensemble et sont enroulés en hélice l'un autour de l'autre.

Avantageusement, le rapport du module tangent à la force équivalente développée par la nappe crue à 7 % d'allongement sur le module sécant à la force équivalente développée par la nappe crue à 1% d'allongement est supérieur ou égal à 2,20.

Avantageusement, le rapport du module tangent à la force équivalente développée par la nappe crue à 7 % d'allongement sur le module sécant à la force équivalente développée par la nappe crue à 1% d'allongement est inférieur ou égal à 4,00 et de préférence inférieur ou égal à 3,50.

Avantageusement, le module sécant à la force équivalente développée par la nappe crue à 1% d'allongement sur la force à rupture de la nappe de carcasse crue est inférieur ou égal à 4,00.

Avantageusement, le module sécant à la force équivalente développée par la nappe crue à 1% d'allongement sur la force à rupture de la nappe de carcasse crue est supérieur ou égal à 1,00 et de préférence supérieur ou égal à 2,00.

Avantageusement, le module tangent à la force équivalente développée par la nappe crue à 7 % d'allongement sur la force à rupture de la nappe de carcasse crue est supérieur ou égal à 6,00 et de préférence supérieur ou égal à 7,00.

Avantageusement, le module tangent à la force équivalente développée par la nappe crue à 7 % d'allongement sur la force à rupture de la nappe de carcasse crue est inférieur ou égal à 12,00 et de préférence inférieur ou égal à 10,00.

### Troisième mode de réalisation de l'invention

Avantageusement, le pneumatique selon un troisième mode de réalisation, comprend au moins une nappe de carcasse comprenant un ou plusieurs éléments de renfort de carcasse, le ou chaque élément de renfort de carcasse comprend :

- une âme constituée d'un premier brin multifilamentaire de polyamide aliphatique, et
- une couche comprenant au moins deux deuxièmes brins multifilamentaires de polyamide aromatique ou copolyamide aromatique, les deuxième brins de la couche étant enroulés en hélice autour de l'âme.

De préférence, la couche est constituée trois deuxièmes brins multifilamentaires de polyamide aromatique ou copolyamide aromatique.

Un tel élément filaire textile de renfort de carcasse est couramment désigné par les termes anglais « Core Insertion ». Un procédé de fabrication est notamment décrit dans WO2019122698. Ainsi, l'âme centrale est insérée au milieu des deuxièmes brins de la couche qui lui sont donc périphériques et adjacents. Chaque deuxième brin de la couche est enroulé autour du ou des autres deuxièmes brins de la couche sans que l'âme ne soit enroulée autour des brins de couche.

Avantageusement, le rapport du module tangent à la force équivalente développée par la nappe crue à 7 % d'allongement sur le module sécant à la force équivalente développée par la nappe crue à 1% d'allongement est supérieur ou égal à 5,00 et de préférence supérieur ou égal à 6,00.

Avantageusement, le rapport du module tangent à la force équivalente développée par la nappe crue à 7 % d'allongement sur le module sécant à la force équivalente développée par la nappe crue à 1% d'allongement est inférieur ou égal à 24,00.

Avantageusement, le module sécant de la force équivalente développée par la nappe crue à 1% d'allongement sur la force à rupture de la nappe de carcasse crue est inférieur ou égal à 4,00 et de préférence inférieur ou égal à 3,00.

Avantageusement, le module sécant à la force équivalente développée par la nappe crue à 1% d'allongement sur la force à rupture de la nappe de carcasse crue est supérieur ou égal à 0,60.

Avantageusement, le module tangent à la force équivalente développée par la nappe crue à 7 % d'allongement sur la force à rupture de la nappe de carcasse crue est supérieur ou égal à 8,00.

Avantageusement, le module tangent à la force équivalente développée par la nappe crue à 7 % d'allongement sur la force à rupture de la nappe de carcasse crue est inférieur ou égal à 22,00 et de préférence inférieur ou égal à 20,00.

Les caractéristiques avantageuses décrites ci-dessous s'appliquent indifféremment aux trois modes de réalisation tels que définis ci-dessus.

Avantageusement, le facteur de torsion K de l'élément de renfort de carcasse est strictement supérieur à 150 et de préférence supérieur ou égal à 180.

Le facteur de torsion K est lié à la torsion T selon la relation connue qui suit :

$$K = T \times [(Titre / (1000.\rho)]1/2$$

dans laquelle la torsion T des filaments élémentaires est exprimée en tours par mètre, le Titre est exprimé en tex (poids en gramme de 1000 mètres de l'élément de renfort), et enfin $\rho$ est la densité ou masse volumique (en g/cm3) du matériau (par exemple, environ 1,50 g/cm3 pour la cellulose, 1,44 g/cm3 pour l'aramide, 1,38 g/cm3 pour un polyester tel que PET, 1,14 g/cm3 pour le nylon) ; dans le cas d'un câblé hybride, $\rho$ est bien entendu une moyenne des densités pondérée par les titres respectifs des matériaux de l'élément de renfort. A titre d'exemple, pour le premier mode de réalisation pour un élément de renfort comprenant un assemblage constitué de deux brins multifilamentaires en polyamide aromatique ayant chacun un titre de 330 tex et d'un brin en polyamide aliphatique ayant un titre de 188 tex et dont la torsion de l'élément de renfort est de 270 tours par mètres, le calcul de K est le suivant :

$$K= 270 \times [(330+330+188)/(1000 \times (330$$

$$\times 1,44+330 \times 1,44+188 \times 1,14)/(330+330+188))]1/2$$

$$K= 212$$

La mesure de la torsion T de l'élément de renfort peut être réalisée par toute méthode connue par l'homme du métier, par exemple conformément à la norme ASTM D 885/D 885M - 10a de 2014.

Le titre (ou densité linéique) de chaque brin est déterminé selon la norme ASTM D1423. Le titre est donné en tex (poids en grammes de 1000 m de produit - rappel: 0, 111 tex égal à 1 denier).

Avantageusement, l'élément de renfort a un facteur de torsion K tel qu'il doit avoir une valeur suffisante pour avoir un bon compromis entre, d'une part le module d'extension et la force à rupture, et d'autre part endurance à la fatigue en compression. Ainsi, le pneumatique aura un bon compromis entre rigidité de dérive et endurance.

Avantageusement, le titre du ou des brin(s) multifilamentaire(s) de polyamide aromatique ou copolyamide aromatique est supérieur ou égal à 55 tex, de préférence supérieur ou égal à 70 tex, plus préférentiellement supérieur ou égal à 90 tex et encore plus préférentiellement supérieur ou égal à 110 tex.

Avantageusement, le titre du ou des brin(s) multifilamentaire(s) de polyamide aromatique ou copolyamide aromatique est inférieur ou égal à 500 tex, de préférence inférieur ou égal à 400 tex et plus préférentiellement inférieur ou égal à 340 tex.

Avantageusement, le titre du brin multifilamentaire de polyamide aliphatique est supérieur ou égal à 20 tex, de préférence supérieur ou égal à 30 tex et plus préférentiellement supérieur ou égal à 40 tex.

Avantageusement, le titre du brin multifilamentaire de polyamide aliphatique est inférieur ou égal à 300 tex, de préférence inférieur ou égal à 250 tex, plus préférentiellement inférieur ou égal à 220 tex et encore plus préférentiellement inférieur ou égal à 210 tex.

Avantageusement, la torsion de l'élément de renfort de carcasse (36) va de 240 à 500 tours par mètre et de préférence de 260 à 480 tours par mètre.

Pour un titre donné, dans cet intervalle de torsion, le pneumatique selon l'invention présente une rigidité de dérive suffisante pour être utilisé dans un pneumatique pour véhicule agricole.

Dans l'intervalle de facteur de torsion décrit ci-dessus, en utilisant des titres inférieurs aux intervalles décrits ci-dessus, les éléments de renfort de la nappe de carcasse présenteraient une torsion relativement élevée ce qui conduirait à une force rupture trop faible donc à un risque pour la pression d'éclatement. Le module serait alors trop faible entraînant une baisse de la rigidité de dérive. A l'inverse, en utilisant des titres supérieurs aux intervalles décrits ci-dessus, les éléments de renfort de la nappe de carcasse présenteraient une torsion relativement faible ce qui conduirait un risque d'endurance en compression. Ainsi, les intervalles de titre des brins multifilamentaires de polyamide aromatique ou copolyamide aromatique et polyamide aliphatique décrits ci-dessus permettent d'obtenir un bon compromis force à rupture-rigidité de dérive.

Selon l'invention, la densité d'éléments de renfort de carcasse dans la nappe de carcasse crue va de 50 à 150 éléments de renfort de carcasse par décimètre de nappe de carcasse crue.

Avantageusement, la densité d'éléments de renfort de carcasse dans la nappe de carcasse crue va de 60 à 140 éléments de renfort de carcasse par décimètre de nappe de carcasse crue .

La densité d'éléments de renfort de carcasse adhérisé dans la nappe de carcasse crue est le nombre d'éléments de renfort de carcasse adhérisé pris sur un décimètre de la nappe de carcasse crue selon la direction perpendiculaire à la direction selon laquelle le ou les éléments de renfort de carcasse adhérisé s'étendent parallèlement les uns aux autres.

Dans ces intervalles de densité d'éléments de renfort de carcasse, la nappe de carcasse présente une force à rupture relativement élevée permettant son utilisation dans des pneumatiques pour véhicule agricole.

Avantageusement, le diamètre d de l'élément de renfort de carcasse est inférieur ou égal à 2,0 mm, de préférence inférieur ou égal à 1,8 mm, plus préférentiellement inférieur ou égal à 1,5 mm et encore plus préférentiellement inférieur ou égal à 1,2 mm. L'élément de renfort s'étend selon une direction générale G et le diamètre de cet élément de renfort est le diamètre dans lequel est inscrit cet élément de renfort dans un plan de coupe perpendiculaire à la direction G.

Avantageusement, l'épaisseur E de la nappe de carcasse crue est inférieure ou égale à 3.00 mm, de préférence, inférieure ou égale à 2,50 mm et plus préférentiellement inférieure ou égale à 2,00 mm. L'épaisseur de la nappe de carcasse crue est la distance la plus courte entre les deux surfaces externes de la nappe de carcasse crue, c'est-à-dire la distance mesurée selon une direction perpendiculaire aux deux surfaces externes de la nappe de carcasse crue.

Avantageusement, le rapport d/E est strictement inférieur à 0,65 et de préférence inférieur ou égal à 0,62. Ainsi, on diminue l'épaisseur de la nappe de carcasse crue et ainsi l'hystérèse des pneumatiques pour réduire la consommation d'énergie des véhicules équipés de tels pneumatiques.

Avantageusement, la force à rupture de l'élément de renfort de carcasse est supérieure ou égale à 70 daN, de préférence supérieure ou égale à 110 daN.

Avantageusement, la force à rupture de la nappe de carcasse est supérieure ou égale à 500 daN/cm.

On calcule la force à rupture d'une nappe à partir d'une courbe force-allongement obtenue en appliquant la norme ASTM D 885/D 885M - 10a de 2014 à un élément de renfort de carcasse. On détermine la force à rupture de la nappe de carcasse en multipliant la force à rupture de l'élément de renfort de carcasse par le nombre d'éléments de renfort de carcasse par cm de nappe de carcasse, ce nombre étant déterminé selon une direction perpendiculaire à la direction selon laquelle les éléments de renfort de carcasse s'étendent dans la nappe de carcasse.

Selon l'invention, l'armature de carcasse est constituée d'une ou deux nappes de carcasse.

L'homme du métier saura choisir le nombre de nappes de carcasse en fonction de la force à rupture de l'armature de carcasse qu'il souhaite dépendant de la dimension du pneumatique pour véhicule agricole.

Avantageusement, l'armature de carcasse est constituée d'une nappe de carcasse.

Selon l'invention, chaque élément de renfort de carcasse fait un angle allant de 85° à 95°, avec la direction circonférentielle Z du pneumatique.

Dans la description et les revendications, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Par direction axiale, on entend la direction sensiblement parallèle à l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque intersectant l'axe de rotation du pneumatique et sensiblement perpendiculairement à cet axe.

Par plan médian (noté M), on entend le plan perpendiculaire à l'axe de rotation du pneumatique qui est situé à mi-distance des deux bourrelets et passe par le milieu de l'armature de sommet.

L'invention sera mieux comprise à la lumière de la description qui va suivre donnée uniquement à titre d'exemple non limitatif et faite en se référant aux dessins dans lesquels :

- la figure 1 illustre des courbes force-allongement d'un élément de renfort de carcasse de l'état de la technique et de celui du pneumatique selon l'invention ;
- la figure 2 est une vue en coupe radiale d'un pneumatique pour véhicule agricole selon l'invention ;
- la figure 3 est une vue détaillée en coupe de la zone II du pneumatique de la figure 2 ;
- la figure 4 illustre une nappe de carcasse crue permettant d'obtenir une nappe de carcasse du pneumatique de la figure 2 ;
- la figure 5 est une vue en coupe selon le plan V-V' de la nappe de carcasse crue de la figure 4 ;
- la figure 6 est un agrandissement d'une vue en coupe d'un élément de renfort selon un premier mode de réalisation de l'invention ;
- la figure 7 est un agrandissement d'une vue en coupe d'un élément de renfort selon un deuxième mode de réalisation de l'invention ; et
- la figure 8 est un agrandissement d'une vue en coupe d'un élément de renfort selon un troisième mode de réalisation de l'invention.

## EXEMPLE DE PNEUMATIQUE SELON UN PREMIER MODE DE REALISATION DE L'INVENTION

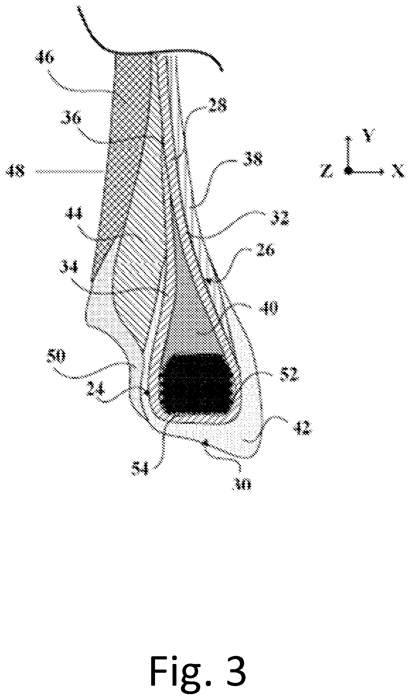

Sur les figures 2 et 3, on a représenté des directions X, Y, Z correspondant à des orientations axiale (X), radiale (Y) et circonférentielle (Z) d'un pneumatique.

On a représenté sur les figures 2 et 3 un exemple de pneumatique conforme à l'invention et désigné par la référence générale 10. Le pneumatique 10 est destiné à un véhicule agricole. En l'espèce, le pneumatique 10 est destiné à un tracteur.

Le pneumatique 10 présente un diamètre nominal de jante tel que défini par l'ETRTO (European Tyre and Rim Technical Organisation) compris entre 24 et 54 pouces bornes incluses (entre 60,96 cm et 137,16 cm). Le pneumatique 10 présente un rapport nominal d'aspect tel que défini par l'ETRTO compris entre 0,7 et 0,9 bornes incluses.

Le pneumatique 10 comporte un sommet 12 comprenant une armature de sommet 14 comprenant une ou plusieurs nappes de sommet 16 d'éléments de renfort. L'armature de sommet 14 est surmontée d'une bande de roulement 18. L'armature de sommet 14 est disposée radialement intérieure à la bande de roulement 18. Deux flancs 20 prolongent le sommet 12 radialement vers l'intérieur. Le pneumatique 10 comporte deux bourrelets 22 radialement intérieurs aux flancs 20 et comportant chacun une structure annulaire de renfort 24.

Le pneumatique 10 comporte également une armature de carcasse radiale 26. L'armature de carcasse 26 s'étend depuis les bourrelets 22 à travers les flancs 20 vers le sommet 12. L'armature de carcasse 26 comporte une ou plusieurs nappes de carcasse 28 comprenant plusieurs éléments de renfort de carcasse 36, au moins une de ces nappes de carcasse 28 étant ancrée dans chacun des bourrelets 22 par un retournement 30 autour de la structure annulaire de renfort 24 de manière à former, dans chaque bourrelet 22, un brin aller 32 s'étendant radialement entre chaque bourrelet 22 à travers les flancs 20 et le sommet 12, et un brin retour 34 s'étendant radialement depuis chaque bourrelet 22 à travers chaque flanc 20, l'extrémité radialement externe 36 du brin retour 34 étant située radialement extérieur à la structure annulaire de renfort 24 et axialement extérieur au brin aller 32. Ici l'armature de carcasse 26 comprend une seule nappe carcasse 28, c'est-à-dire que l'armature de carcasse 26 est constituée de la nappe de carcasse 28.

Chaque élément de renfort de carcasse 36 fait un angle supérieur ou égal à 85° et de préférence allant de 85° à 95°, avec la direction circonférentielle Z du pneumatique 10.

Le pneumatique 10 comprend également une nappe intérieure 38 d'étanchéité agencée radialement et axialement intérieure à l'armature de carcasse 26. La nappe intérieure 38 s'étend entre chaque bourrelet 22, en passant par les flancs 20 et le sommet 12.

Chaque bourrelet 22 comprend, en plus de la structure annulaire de renfort 24, une masse 40 de gomme de bourrage agencée dans un espace délimité par les brins aller 32 et retour 34. Chaque bourrelet 22 comprend également une première masse 42 de gomme de protection du bourrelet 22 suivant le retournement 30 de l'armature de carcasse 26.

Chaque structure annulaire de renfort 24 comprend une tringle 52 annulaire enrobée dans une masse 54 d'habillage, par exemple comprenant de la gomme. La tringle 52 est agencée radialement intérieur à la masse 40 de gomme de bourrage.

## EXEMPLE DE NAPPE DE CARCASSE

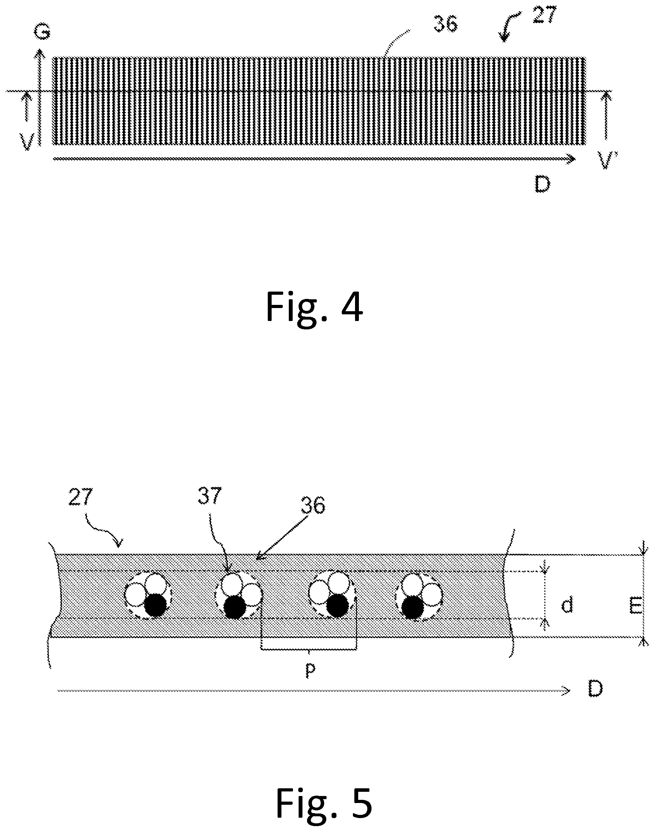

On va maintenant décrire en référence aux figures 4 et 5 une nappe de carcasse crue 27 selon un premier mode de réalisation de l'invention à partir de laquelle est obtenue la nappe de carcasse 28.

La nappe de carcasse 27 est obtenue par un procédé dans lequel on noie le ou les éléments de renfort de carcasse 36 adhérisé(s) dans une composition polymérique. L'élément de renfort de carcasse est recouvert d'une composition adhésive RFL.

La nappe de carcasse crue 27 comprend plusieurs éléments de renfort de carcasse 36. Les éléments de renfort sont agencés côte à côte parallèlement les uns aux autres selon une direction principale D sensiblement perpendiculaire à la direction générale G selon laquelle les éléments de renfort de la nappe de carcasse crue 27 s'étendent, la direction générale G faisant un angle supérieur ou égal à 85° et de préférence allant de 85° à 95°avec la direction circonférentielle Z du pneumatique 10 une fois la nappe de carcasse crue 27 formant la nappe de carcasse 28 au sein du pneumatique 10. En l'espèce, la direction générale G fait un angle sensiblement égal à 90° avec la direction circonférentielle Z du pneumatique 10 une fois le nappe de carcasse crue formant la nappe de carcasse 28 au sein du pneumatique 10.

Le rapport du module tangent à la force équivalente développée par la nappe crue à 7 % d'allongement sur le module sécant à la force équivalente développée par la nappe crue à 1% d'allongement est supérieur ou égal à 2,00 ; il est inférieur ou égal à 30,00, de préférence inférieur ou égal à 27,00 et plus préférentiellement inférieur ou égal à 24,00. Plus avantageusement, le rapport du module tangent à la force équivalente développée par la nappe crue à 7 % d'allongement sur le module sécant à la force équivalente développée par la nappe crue à 1% d'allongement est supérieur ou égal à 4,00 ; et il est inférieur ou égal à 10,00, de préférence inférieur ou égal à 7,00 et plus préférentiellement inférieur ou égal à 5,00 . Ici il est égal à 4,76.

Le rapport du module sécant à la force équivalente développée par la nappe crue à 1% d'allongement sur la force à rupture de la nappe de carcasse crue est inférieur strictement à 7,00, de préférence inférieur ou égal à 5,00 et plus préférentiellement inférieur ou égal à 4,00 ; et il est supérieur ou égal à 0,50. Plus avantageusement, le module sécant à la force équivalente développée par la nappe crue à 1% d'allongement sur la force à rupture de la nappe de carcasse crue est inférieur ou égal à 5,00 et de préférence inférieur ou égal à 4,00 et il est supérieur ou égal à 1,00, de préférence supérieur ou égal à 2,00 et plus préférentiellement supérieur ou égal à 3,00. Ici il est de 3,53.

Le rapport du module tangent à la force équivalente développée par la nappe crue à 7 % d'allongement sur la force à rupture de la nappe de carcasse crue est supérieur strictement à 6,00 et de préférence supérieur ou égal à 7,00 ; et il est inférieur ou égal à 30,00, de préférence inférieur ou égal à 25,00 et plus préférentiellement inférieur ou égal à 22,00. Plus avantageusement, le module tangent à la force équivalente développée par la nappe crue à 7 % d'allongement sur la force à rupture de la nappe de carcasse crue est supérieur ou égal à 8,00, de préférence supérieur ou égal à 10,00 et préférentiellement supérieur ou égal à 13,00 et il est inférieur ou égal à 18,00 et de préférence inférieur ou égal à 17,00. Ici il est égal à 16,78.

On va décrire ci-dessous un élément de renfort de carcasse 36 et l'assemblage 37 correspondant.

**Nature des brins de l'élément de renfort de carcasse**

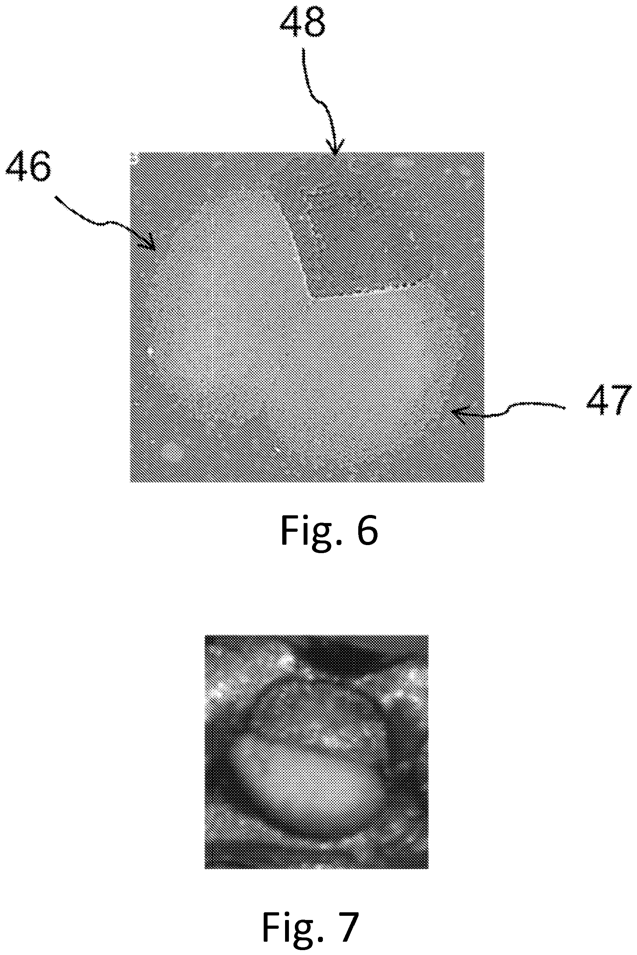

Comme représenté schématiquement sur la figure 5, l'élément de renfort de carcasse 36 comprend un assemblage 37 constitué de deux brins multifilamentaires en polyamide aromatique ou copolyamide aromatique 46,47 et d'un brin multifilamentaire en polyamide aliphatique 48, les trois brins 46,47 et 48 étant enroulés ensemble en hélice pour former une couche. L'élément de renfort de carcasse 36 est équilibré en torsions. A des fins de précision de la description, la figure 6 est une vue en coupe de l'élément de renfort 36 conforme à un premier mode de réalisation de l'invention et sur laquelle on distingue les monofilaments de chacun des brins.

Le polyamide aromatique choisi est ici de préférence un para-aramide, connu sous la dénomination commerciale Kevlar 1K1380 type 956 de la société Maydown .

Le polyamide aliphatique est le nylon, connu sous la dénomination commerciale Nylon T728 de la société Kordsa.

Dans certains modes de réalisation non représentés, l'élément de renfort de carcasse 36 comprend, en plus de l'assemblage 37, une couche d'une composition adhésive revêtant l'assemblage 37.

**Titre de l'élément de renfort de carcasse 36**

Dans l'élément de renfort de carcasse 36, le titre du brin 46 ou 47 est supérieur ou égal à 55 tex, de préférence supérieur ou égal à 70 tex, plus préférentiellement supérieur ou égal à 90 tex et encore plus préférentiellement supérieur ou égal à 110 tex.

Dans l'élément de renfort de carcasse 36, le titre des brins 46 ou 47 est inférieur ou égal à 360 tex et de préférence inférieur ou égal à 340 tex.

Ici le titre du brin 46 est égal à celui du brin 47 qui est de 330 tex.

Dans l'élément de renfort de carcasse 36, le titre du brin multifilamentaire 48 en polyamide aliphatique est supérieur ou égal à 20 tex , de préférence supérieur ou égal à 30 tex et plus préférentiellement supérieur ou égal à 40 tex.

Dans l'élément de renfort de carcasse 36, le titre du brin multifilamentaire de polyamide aliphatique est inférieur ou égal à 300 tex, de préférence inférieur ou égal à 250 tex, plus préférentiellement inférieur ou égal à 220 tex et encore plus préférentiellement inférieur ou égal à 210 tex.

Ici, le titre du brin 48 est égal à 188 tex.

Le facteur de torsion K de l'élément de renfort de carcasse 36 est strictement supérieur à 150 et de préférence supérieur ou égal à 180. Ici, il est égal à 212.

**Torsion de l'élément de renfort de carcasse**

Dans l'élément de renfort de carcasse 36, la torsion de l'élément de renfort va de 240 à 500 tours par mètre et de préférence de 260 à 480 tours par mètre. En l'espèce, la torsion de l'élément de renfort 36 est égale à 270 tours par mètre.

**Caractéristiques géométriques de la nappe de carcasse crue 27**

En référence à la figure 5, la nappe de carcasse crue 27 présente une épaisseur E et l'élément de renfort de carcasse 36 présente un diamètre d. Sur cette figure 5, la représentation de chaque brin est volontairement schématique à des fins de simplification de la description. La figure 6 illustre l'élément de renfort de carcasse 36 tel qu'il est observable en réalité.

Le diamètre de l'élément de renfort de carcasse 36 est inférieur ou égal à 2,0 mm, de préférence inférieur ou égal à 1,8 mm, plus préférentiellement inférieur ou égal à 1,5 mm et encore plus préférentiellement inférieur ou égal à 1,2 mm. Ici, l'élément de renfort de carcasse 36 présente un diamètre d=1,11 mm.

L'épaisseur E de la nappe de carcasse crue 27 est inférieure ou égale à 3,00 mm, de préférence, inférieure ou égale à 2,50 mm, plus préférentiellement inférieure ou égale à 2,00 mm. L'élément de renfort de carcasse 36 présente une épaisseur E=1,90 mm.

Ainsi, le rapport d/E est strictement inférieur à 0,65, de préférence inférieur ou égal à 0,62. L'élément de renfort de carcasse 36 présente un rapport d/E=0,58.

La densité de l'élément de renfort de carcasse 36 dans la nappe de carcasse crue 27 va 50 à 150 éléments de renfort de carcasse 36 par décimètre de nappe de carcasse 28, de préférence de 60 à 140 éléments de renfort de carcasse 36 par décimètre de nappe de carcasse 28. Ici, la densité d'éléments de renfort de carcasse 36 est égale à 67 éléments de renfort de carcasse 36 par décimètre de nappe de carcasse crue 27.

On a représenté sur la figure 5, le pas P qui est la distance exprimée en mm séparant deux points analogues de deux éléments de renfort 36 adjacents. Le pas P est généralement appelé pas de pose des éléments de renfort dans la nappe de carcasse crue. Le pas P et la densité d'élément de renfort par décimètre de nappe de carcasse crue sont tels que la densité d'élément de renfort par décimètre de nappe de carcasse crue est égale à 100/P.

La densité d'éléments de renfort et l'épaisseur décrites ci-dessus sont, comme expliqué précédemment, la densité d'éléments de renfort de carcasse 36 et l'épaisseur E de la nappe de carcasse crue 27. Dans le pneumatique 10, la nappe de carcasse 28 étant obtenue à partir de la nappe de carcasse crue 27 par conformation d'une ébauche de pneumatique, la densité d'éléments de renfort ainsi que l'épaisseur de la nappe de carcasse 28 sont différentes de celles de la nappe de carcasse crue et varient selon que l'on se trouve plus ou moins proche de l'axe de révolution du pneumatique. Ces variations sont notamment dépendantes du taux de conformation de l'ébauche du pneumatique mais également de sa géométrie. A partir notamment du taux de conformation de l'ébauche du pneumatique et de sa géométrie, l'homme du métier saura déterminer les caractéristiques de la nappe de carcasse crue correspondant.

**PROCEDE DE FABRICATION DE L'ELEMENT DE RENFORT**

Comme décrit précédemment, l'élément de renfort de carcasse 36 est équilibré en torsions, c'est-à-dire que les deux brins multifilamentaires sont enroulés avec une torsion sensiblement identique et que la torsion des monofilaments de chaque brin multifilamentaire est sensiblement nulle. Dans une première étape, chaque filé de monofilaments (en anglais « yarn ») est tout d'abord individuellement tordu sur lui-même selon une torsion initiale égale à 270 tours par mètre dans une direction donnée, ici le sens Z, pour former un brin ou surtors (en anglais « strand »). Puis, au cours d'une seconde étape, les trois brins, sont ensuite retordus ensemble selon une torsion finale égale à 270 tours par mètre en direction S pour l'obtention de l'assemblage de l'élément de renfort (en anglais « cord »).

Dans des étapes ultérieures, chaque assemblage est revêtu d'une composition adhésive, par exemple une composition adhésive de type RFL (acronyme pour Résorcinol-Formaldéhyde-Latex) et subit des étapes de traitement thermique afin de faire réticuler, au moins en partie, la composition adhésive.

**PROCEDE DE FABRICATION DE LA NAPPE DE CARCASSE CRUE**

On fabrique la nappe de carcasse crue 27 en noyant plusieurs éléments de renfort 45 dans la composition d'élastomère, par exemple par calandrage. Durant une telle étape de calandrage, bien connue de l'homme du métier, on fait défiler des éléments de renforts et on amène deux bandes réalisées dans une composition d'élastomère, appelées skims, de part et d'autre des éléments de renfort de façon à prendre en sandwich les éléments de renforts entre les deux skims. On noie ainsi les éléments de renfort dans la composition d'élastomère.

## PROCEDE DE FABRICATION DU PNEUMATIQUE SELON L'INVENTION

Le procédé de fabrication du pneumatique est celui utilisé classiquement par l'homme du métier. Au cours de ce procédé et comme déjà décrit précédemment, on dispose successivement, lors d'une première série d'étapes d'assemblages, différentes nappes, dont la nappe de carcasse crue 27 destinée à former la nappe de carcasse 28 du pneumatique 10. Puis, on conforme l'ébauche ainsi obtenue. Ensuite, on dispose d'autres nappes destinées à former le sommet 12 du pneumatique 10. Enfin, on vulcanise l'ébauche ainsi obtenue pour obtenir le pneumatique 10.

## PNEUMATIQUE SELON UN DEUXIEME MODE DE REALISATION DE L'INVENTION

A la différence du pneumatique 10 selon le premier mode de réalisation, le pneumatique 10-2 selon le deuxième mode de réalisation comprend un élément de renfort de carcasse comprenant un assemblage constitué d'un unique brin multifilamentaire de polyamide aromatique ou copolyamide aromatique, et d'un unique brin multifilamentaire de polyamide aliphatique, les brins étant enroulés ensemble en hélice l'un autour de l'autre. A des fins de précision de la description, la figure 7 est une vue en coupe de l'élément de renfort 36-2 de la nappe de carcasse crue 27-2 conforme à un deuxième mode de réalisation de l'invention et sur laquelle on distingue les monofilaments de chacun des brins.

Le rapport du module tangent à la force équivalente développée par la nappe crue à 7 % d'allongement sur le module sécant à la force équivalente développée par la nappe crue à 1% d'allongement est supérieur ou égal à 2,20 et il est inférieur ou égal à 4,00 et de préférence inférieur ou égal à 3,50.

Le module sécant à la force équivalente développée par la nappe crue à 1% d'allongement sur la force à rupture de la nappe de carcasse crue est inférieur ou égal à 4,00 et il est supérieur ou égal à 1,00 et de préférence supérieur ou égal à 2,00.

Le module tangent à la force équivalente développée par la nappe crue à 7 % d'allongement sur la force à rupture de la nappe de carcasse crue est supérieur ou égal à 6,00 et de préférence supérieur ou égal à 7,00 et il est inférieur ou égal à 12,00 et de préférence inférieur ou égal à 10,00.

Les caractéristiques du pneumatique 10-2 et de la nappe de carcasse 27-2 se trouvent dans les tableaux 2,3 et 4 ci-dessous.

## PNEUMATIQUE SELON UN TROISIEME MODE DE REALISATION DE L'INVENTION

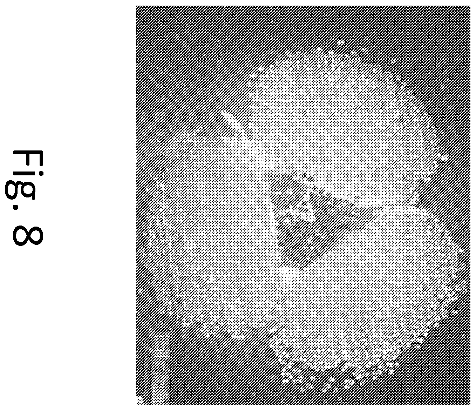

A la différence du pneumatique 10 selon le premier mode de réalisation, le pneumatique 10-4 selon le troisième mode de réalisation comprend un élément de renfort de carcasse comprenant une âme constituée d'un premier brin multifilamentaire de polyamide aliphatique, et une couche comprenant trois deuxièmes brins multifilamentaires de polyamide aromatique ou copolyamide aromatique, chaque deuxième brin de la couche est enroulé autour des autres deuxièmes brins de la couche sans que l'âme ne soit enroulée autour des brins de couche .. A des fins de précision de la description, la figure 8 est une vue en coupe de l'élément de renfort 36-4 de la nappe de carcasse crue 27-4 conforme à un troisième mode de réalisation de l'invention et sur laquelle on distingue les monofilaments de chacun des brins.

Le rapport du module tangent à la force équivalente développée par la nappe crue à 7 % d'allongement sur le module sécant à la force équivalente développée par la nappe crue à 1% d'allongement est supérieur ou égal à 5,00 et de préférence supérieur ou égal à 6,00 et il est inférieur ou égal à 24,00.

Le module sécant à la force équivalente développée par la nappe crue à 1% d'allongement sur la force à rupture de la nappe de carcasse crue est inférieur ou égal à 4,00 et de préférence inférieur ou égal à 3,00 et le module sécant à la force équivalente développée par la nappe crue à 1% d'allongement sur la force à rupture de la nappe de carcasse crue est supérieur ou égal à 0,60.

Le module tangent à la force équivalente développée par la nappe crue à 7 % d'allongement sur la force à rupture de la nappe de carcasse crue est supérieur ou égal à 8,00 et il est inférieur ou égal à 22,00 et de préférence inférieur ou égal à 20,00.

Les caractéristiques du pneumatique 10-4 et de la nappe de carcasse 27-4 se trouvent dans les tableaux 2,3 et 4 ci-dessous.

## MESURES ET TESTS COMPARATIFS

A titre d'exemple comparatif, on a pris deux nappes de carcasse de l'état de la technique désignées respectivement par la référence générale NEDT1 et NEDT2 d'un pneumatique de l'état de la technique. Les nappes de carcasse NEDT1 et NEDT2 comprennent respectivement des éléments de renfort de carcasse comprenant chacune un assemblage constitué de deux brins multifilamentaires en polyester assemblés ensemble et enroulés en hélice l'un autour de l'autre à une torsion de respectivement 420 tours par mètre et 335 tours par mètre. Chaque élément de renfort de carcasse est équilibré en torsion et chaque brin de chaque élément de renfort de carcasse présente un titre respectivement égal à 144 tex et 220 tex.

On a également utilisé deux nappes de carcasse C1 et C2 témoin comprenant des éléments de renforts témoins comprenant chacun un assemblage constitué d'un brin multifilamentaire de polyamide aromatique ou copolyamide aromatique et un brin multifilamentaire de polyester et assemblés ensemble et enroulés en hélice l'un autour de l'autre à respectivement une torsion de 380 tours par mètre et 270 tours par mètres. Chaque élément de renfort de carcasse est équilibré en torsions et le brin multifilamentaire de polyamide aromatique ou copolyamide aromatique, ici de para-aramide présente un titre égal à 167 tex pour C1 et 330 tex pour C2. Le brin multifilamentaire de polyester, ici de PET, présente un titre égal à 144 tex pour C1 et 334 tex pour C2.

**Comparaison des nappes de carcasses**

On a résumé dans les tableaux 1 et 2 ci-dessous les caractéristiques géométriques des nappes de carcasses témoin C1 et C2, des nappes de carcasses de l'état de la technique (NEDT1 et NEDT2) et des nappes de carcasses selon les premier (27 et 27-1), deuxième (27-2 et 27-3) et troisième (27-4 à 27-6) modes de réalisation de l'invention.

[Tableau 1]

| Nappe de carcasse | NEDT1 | NEDT2 | C1 | C2 |
|---|---|---|---|---|
| Nature des brins | PET/PET | PET/PET | Aramide/PET | Aramide/PET |
| Titres des brins (tex) | 144/144 | 220/220 | 167/144 | 330/334 |
| Torsions des brins (tours/m) | 420/420 | 335/335 | 380/380 | 270/270 |
| K | 192 | 189 | 178 | 185 |
| Densité (fils/dm) | 120 | 96 | 113 | 74 |
| d (mm) | 0,62 | 0,75 | 0,66 | 1 |
| E (mm) | 1,41 | 1,72 | 1,46 | 1,8 |
| d/E | 0,44 | 0,44 | 0,45 | 0,56 |

[Tableau 2]

| Nappe de carcasse | 27 | 27-1 | 27-2 | 27-3 | 27-4 | 27-5 | 27-6 |
|---|---|---|---|---|---|---|---|
| Élément de renfort de carcasse | 36 | 36-1 | 36-2 | 36-3 | 36-4 | 36-5 | 36-6 |
| Nature des brins | Aramide/ Aramide/ Nylon | Aramide/ Aramide/ Nylon | Aramide/ Nylon | Aramide/ Nylon | Nylon/1 + Aramide/ 3 | Nylon/1 + Aramide/ 3 | Nylon/1 + Aramide/ 3 |
| Titres des brins (tex) | 330/330/1 88 | 167/167/1 40 | 110/94 | 167/140 | 47/1 + 167/3 | 47/1 + 167/3 | 47/1 + 167/3 |
| Torsions des brins (tours/m) | 270/270 | 330/330 | 470/470 | 380/380 | 340+ 315/315 | 340+ 315/315 | 340+ 315/315 |
| K | 212 | 195 | 186 | 184 | 196 | 196 | 196 |
| Densité (fils/dm) | 67 | 90 | 133 | 109 | 81 | 77 | 76 |

(suite)

| Nappe de carcasse | 27 | 27-1 | 27-2 | 27-3 | 27-4 | 27-5 | 27-6 |
|---|---|---|---|---|---|---|---|
| Élément de renfort de carcasse | 36 | 36-1 | 36-2 | 36-3 | 36-4 | 36-5 | 36-6 |
| d (mm) | 1,11 | 0,83 | 0,56 | 0,68 | 0,92 | 0,97 | 0,98 |
| E (mm) | 1,90 | 1,63 | 1,36 | 1,08 | 1,80 | 1,37 | 1,38 |
| d/E | 0,58 | 0,51 | 0,41 | 0,46 | 0,51 | 0,55 | 0,55 |

On a ensuite regroupé dans le tableau 3 ci-dessous les données d'allongement et de force à rupture des nappes de carcasses selon l'invention, des nappes de carcasses témoin et des nappes de carcasses de l'état de la technique.

[Tableau 3]

| Nappe de carcasse | NEDT 1 | NEDT 2 | C1 | C2 | 27 | 27-1 | 27-2 | 27-3 | 27-4 | 27-5 | 27-6 |
|---|---|---|---|---|---|---|---|---|---|---|---|
| Force à rupture d'une nappe (daN/cm) | 213 | 266 | 356 | 459 | 775 | 576 | 314 | 397 | 641 | 578 | 573 |
| Module sécant à 1% d'allongemen t vs force à rupture de nappe | 7,70 | 7,82 | 8,38 | 7,22 | 3,53 | 3,37 | 2,8 2 | 3,1 0 | 0,82 | 0,63 | 2,29 |
| Module tangent à 7% d'allongemen t vs force à rupture de nappe | 5,27 | 4,88 | 14,1 9 | 14,2 6 | 16,7 8 | 13,6 4 | 9,3 3 | 7,4 5 | 19,1 6 | 8,67 | 15,6 7 |
| Module tangent à 7% d'allongemen t / Module sécant à 1% d'allongemen t | 0,68 | 0,62 | 1,69 | 1,97 | 4,76 | 4,05 | 3,3 0 | 2,4 0 | 23,4 4 | 13,7 7 | 6,83 |

**Comparaison des pneumatiques**

On a ensuite comparé les pneumatiques selon l'invention aux pneumatiques témoins PC1 et PC2 et aux pneumatiques PEDT1 et PEDT2 de l'état de la technique comprenant une ou plusieurs nappes de carcasse précédemment décrites dans les tableaux 1 à 3 par rapport à leur résistance à l'éclatement, leur conformation à cru, leur rigidité de dérive et par rapport au compromis conformation versus rigidité de dérive.

On a comparé entre elles, les résistances aux pressions d'éclatement des pneumatiques PEdT1, PEdT2, PC1, PC2 et 10 à 10-6 en dimensionnant le nombre de nappes de carcasses afin d'obtenir une force à rupture adaptée au pneumatique à usage agricole ; ensuite on a comparé la conformation à cru des pneumatiques PEdT1, PEdT2, PC1, PC2 et 10 à 10-6 en faisant le lien avec le descripteur du module sécant à 1% des nappes de carcasses NdT1, NdT2, C1, C2 et 27 à 27-6 , puis on a comparé la rigidité de dérive des pneumatiques PEdT1, PEdT2, PC1, PC2 et 10 à 10-6 en faisant le lien avec le descripteur du module tangent à 7% des nappes de carcasses NdT1, NdT2, C1, C2 et 27 à 27-6 et enfin on en a déduit le meilleur compromis conformation à cru versus rigidité de dérive pour les pneumatiques PEdT1, PEdT2, PC1, PC2 et 10 à 10-6.

Les résultats sont rassemblés dans le tableau 4 ci-dessous.

On a indiqué dans le tableau 4, la résistance à l'éclatement des pneumatiques testés. Une bonne résistance à l'éclatement est indiquée par le signe « + ». Une très bonne résistance à l'éclatement est indiquée par le signe « ++ ».

De la même façon, on a indiqué la conformation à cru, la rigidité de dérive et le compromis conformation versus rigidité de dérive, mauvais est indiqué par le signe « - », bon est indiqué par le signe « + » et très bon est indiqué par le signe « ++ ».

[Tableau 4]

| Pneumatique | PEDT1 | PEDT2 | PC1 | PC2 | 10 | 10-1 | 10-2 | 10-3 | 10-4 | 10-5 | 10-6 |
|---|---|---|---|---|---|---|---|---|---|---|---|
| nombre de nappe de carcasse | 3 | 3 | 2 | 2 | 1 | 1 | 2 | 2 | 1 | 1 | 1 |
| Force à rupture de la ou des nappe(s) (daN/cm) | 638 | 798 | 712 | 918 | 775 | 576 | 629 | 794 | 641 | 578 | 573 |
| résistance à l'éclatement | + | + | ++ | ++ | ++ | + | + | ++ | + | + | + |
| conformation à cru | - | - | - | - | + | + | + | + | ++ | ++ | + |
| Rigidité de dérive | - | - | + | + | ++ | + | + | + | ++ | + | ++ |
| Compromis conformation vs rigidité de dérive | - | - | - | - | + | + | + | + | ++ | ++ | + |

Ces résultats montrent que les pneumatiques 10 à 10-6 selon l'invention présentent à la fois une résistance à la pression d'éclatement équivalente ou supérieure aux pneumatiques de l'état de la technique PEdT1 et PEdT2 et qui plus est, une conformation à cru significativement meilleure ainsi qu'une rigidité de dérive significativement plus élevée par rapport aux pneumatiques de l'état de la technique PEdT1 et PEdT2.

De plus, par rapport aux pneumatiques témoins PC1 et PC2, on constate que les pneumatiques 10 à 10-6 possèdent une conformation à cru significativement meilleure. Cette très bonne conformation à cru est le résultat de l'utilisation notamment d'un brin multifilamentaire de polyamide aliphatique. A rigidité de dérive équivalente, on constate que le pneumatique PC1 n'a pas une bonne conformation à cru alors que le pneumatique 10-1 valide tous les critères et notamment le compromis conformation versus rigidité de dérive.

Les pneumatiques selon l'invention présentent donc une très bonne conformation à cru et une rigidité de dérive améliorée, tout en conservant à la fois une très bonne résistance à la pression d'éclatement.

Ainsi, comme le montrent les résultats ci-dessus, l'invention consiste bien en un pneumatique comprenant un ou plusieurs éléments de renfort de carcasse , chaque élément de renfort de carcasse comprenant:

- un assemblage constitué de deux brins multifilamentaires de polyamide aromatique ou copolyamide aromatique, et d'un unique brin multifilamentaire de polyamide aliphatique, les brins étant enroulés ensemble en hélice pour former une couche ; ou
- un assemblage constitué d'un unique brin multifilamentaire de polyamide aromatique ou copolyamide aromatique, et d'un unique brin multifilamentaire de polyamide aliphatique,

les brins étant enroulés ensemble en hélice l'un autour de l'autre ; ou

- une âme constituée d'un premier brin multifilamentaire de polyamide aliphatique, et une couche comprenant au moins deux deuxièmes brins multifilamentaires de polyamide aromatique ou copolyamide aromatique, les deuxièmes brins de la couche étant enroulés ensemble en hélice autour de l'âme ;

caractérisé en ce que le pneumatique est obtenu par un procédé comprenant une étape de fabrication de chaque nappe de carcasse dans laquelle on noie le ou les éléments de renfort de carcasse adhérisé(s) dans une composition polymérique pour former chaque nappe de carcasse crue, le rapport du module tangent à la force équivalente développée par la nappe crue à 7 % d'allongement sur le module sécant à la force équivalente développée par la nappe crue à 1% d'allongement est supérieur ou égal à 2,00.

L'invention ne se limite pas aux modes de réalisation précédemment décrits.

On pourra également combiner les caractéristiques des différents modes de réalisation et variantes décrits ou envisagés ci-dessus sous réserve que celles-ci soient compatibles entre elles et conformes à l'invention.

On pourra également envisager indépendamment d'un pneumatique pour véhicule agricole comprenant deux bourrelets comportant chacun au moins une structure annulaire de renfort et une armature de carcasse ancrée dans chacun des bourrelets par un retournement autour de la structure annulaire de renfort, l'armature de carcasse comprend au moins une nappe de carcasse comprenant un ou plusieurs éléments de renfort de carcasse, chaque élément de renfort de carcasse comprend:

- un assemblage constitué de deux brins multifilamentaires de polyamide aromatique ou copolyamide aromatique, et d'un unique brin multifilamentaire de polyamide aliphatique, les brins étant enroulés ensemble en hélice pour former une couche ; ou
- un assemblage constitué d'un unique brin multifilamentaire de polyamide aromatique ou copolyamide aromatique, et d'un unique brin multifilamentaire de polyamide aliphatique,

les brins étant enroulés ensemble en hélice l'un autour de l'autre ; ou

- une âme constituée d'un premier brin multifilamentaire de polyamide aliphatique, et une couche comprenant au moins deux deuxièmes brins multifilamentaires de polyamide aromatique ou copolyamide aromatique, les deuxièmes brins de la couche étant enroulés ensemble en hélice autour de l'âme ;

dans lequel le pneumatique est obtenu par un procédé comprenant une étape de fabrication de chaque nappe de carcasse dans laquelle on noie le ou les éléments de renfort de carcasse adhérisé(s) dans une composition polymérique pour former chaque nappe de carcasse crue, le rapport du module tangent à la force équivalente développée par la nappe crue à 7 % d'allongement sur le module sécant à la force équivalente développée par la nappe crue à 1% d'allongement est supérieur ou égal à 2,00 ;

un pneumatique pour véhicule agricole comprenant deux bourrelets comportant chacun au moins une structure annulaire de renfort et une armature de carcasse ancrée dans chacun des bourrelets par un retournement autour de la structure annulaire de renfort, l'armature de carcasse comprend au moins une nappe de carcasse comprenant un ou plusieurs éléments de renfort de carcasse, chaque élément de renfort de carcasse comprend:

- un assemblage constitué de deux brins multifilamentaires de polyamide aromatique ou copolyamide aromatique, et d'un unique brin multifilamentaire de polyamide aliphatique, les brins étant enroulés ensemble en hélice pour former une couche ; ou
- un assemblage constitué d'un unique brin multifilamentaire de polyamide aromatique ou copolyamide aromatique, et d'un unique brin multifilamentaire de polyamide aliphatique,

les brins étant enroulés ensemble en hélice l'un autour de l'autre ; ou

- une âme constituée d'un premier brin multifilamentaire de polyamide aliphatique, et une couche comprenant au moins deux deuxièmes brins multifilamentaires de polyamide aromatique ou copolyamide aromatique, les deuxièmes brins de la couche étant enroulés ensemble en hélice autour de l'âme ;

dans lequel le pneumatique est obtenu par un procédé comprenant une étape de fabrication de chaque nappe de carcasse dans laquelle on noie le ou les éléments de renfort de carcasse adhérisé(s) dans une composition polymérique pour former chaque nappe de carcasse crue, le rapport du module sécant à la force équivalente développée par la nappe crue à 1% d'allongement sur la force à rupture de la nappe de carcasse crue est inférieur strictement à 7,00, de préférence inférieur ou égal à 5,00 et plus préférentiellement inférieur ou égal à 4,00.

Toutes les caractéristiques avantageuses et préférentielles décrites dans la présente demande pourront être envisagées avec celle de ce pneumatique.

**Revendications**

1. Pneumatique présentant un diamètre nominal de jante tel que défini par l'ETRTO compris entre 24 et 54 pouces bornes incluses et un rapport nominal d'aspect tel que défini par l'ETRTO compris entre 0,7 et 0,9 bornes incluses pour véhicule agricole (10) comprenant deux bourrelets (22) comportant chacun au moins une structure annulaire de renfort (24) et une armature de carcasse (26) ancrée dans chacun des bourrelets (22) par un retournement autour de la structure annulaire de renfort (26), l'armature de carcasse (26) constituée d'une ou deux nappes de carcasse (28) comprenant un ou plusieurs éléments de renfort de carcasse (36), chaque élément de renfort de carcasse (36) comprend:

   - un assemblage (37) constitué de deux brins multifilamentaires de polyamide aromatique ou copolyamide aromatique, et d'un unique brin multifilamentaire de polyamide aliphatique, les brins étant enroulés ensemble en hélice pour former une couche ; ou
- un assemblage (37) constitué d'un unique brin multifilamentaire de polyamide aromatique ou copolyamide aromatique, et d'un unique brin multifilamentaire de polyamide aliphatique,

les brins étant enroulés ensemble en hélice l'un autour de l'autre ; ou

- une âme constituée d'un premier brin multifilamentaire de polyamide aliphatique, et une couche comprenant au moins deux deuxièmes brins multifilamentaires de polyamide aromatique ou copolyamide aromatique, les deuxièmes brins de la couche étant enroulés ensemble en hélice autour de l'âme ;
**caractérisé en ce que** le pneumatique (10) est obtenu par un procédé comprenant une étape de fabrication de chaque nappe de carcasse (28) dans laquelle on noie le ou les éléments de renfort de carcasse (36) recouvert(s) d'un revêtement ayant une fonction d'adhésion dans une composition polymérique pour former chaque nappe de carcasse crue (27), le rapport du module tangent à la force équivalente développée par la nappe crue à 7 % d'allongement sur le module sécant à la force équivalente développée par la nappe crue à 1% d'allongement est supérieur ou égal à 2,00, les modules tangent et sécant étant obtenus à partir d'une courbe force-allongement obtenue en appliquant la norme ASTM D 885/D 885M - 10a de 2014 ;
dans lequel la densité d'éléments de renfort de carcasse (36) dans la nappe de carcasse crue (27) va de 50 à 150 éléments de renfort de carcasse (36) par décimètre de nappe de carcasse crue (27) et ;
dans lequel chaque élément de renfort de carcasse (36) fait un angle allant de 85° à 95° avec la direction circonférentielle Z du pneumatique (10)..

2. Pneumatique (10) selon l'une quelconque des revendications précédentes, dans lequel le rapport du module tangent à la force équivalente développée par la nappe crue à 7 % d'allongement sur le module sécant à la force équivalente développée par la nappe crue à 1% d'allongement est inférieur ou égal à 30,00, de préférence inférieur ou égal à 27,00 et plus préférentiellement inférieur ou égal à 24,00.

3. Pneumatique (10) selon l'une quelconque des revendications précédentes, dans lequel le rapport du module sécant à la force équivalente développée par la nappe crue à 1% d'allongement sur la force à rupture de la nappe de carcasse crue est inférieur strictement à 7,00, de préférence inférieur ou égal à 5,00 et plus préférentiellement inférieur ou égal à 4,00.

4. Pneumatique (10) selon l'une quelconque des revendications précédentes, dans lequel le rapport du module sécant à la force équivalente développée par la nappe crue à 1% d'allongement sur la force à rupture de la nappe de carcasse crue est supérieur ou égal à 0,50.

5. Pneumatique (10) selon l'une quelconque des revendications précédentes, dans lequel le rapport du module tangent à la force équivalente développée par la nappe crue à 7 % d'allongement sur la force à rupture de la nappe de carcasse crue est supérieur strictement à 6,00 et de préférence supérieur ou égal à 7,00.

6. Pneumatique (10) selon l'une quelconque des revendications précédentes, dans lequel le rapport du module tangent à la force équivalente développée par la nappe crue à 7 % d'allongement sur la force à rupture de la nappe de carcasse crue est inférieur ou égal à 30,00, de préférence inférieur ou égal à 25,00 et plus préférentiellement inférieur ou égal à 22,00.

7. Pneumatique (10) selon l'une quelconque des revendications précédentes, dans lequel le facteur de torsion K de l'élément de renfort de carcasse (36) est strictement supérieur à 150 et de préférence supérieur ou égal à 180 avec K défini par la formule :

$$K = T \times [(\text{Titre} / (1000.\rho)]^{1/2}$$

dans laquelle T est la torsion de l'élément de renfort de carcasse (36) exprimée en tours par mètre, Titre est la somme des titres des brins multifilamentaires de l'élément de renfort de carcasse en tex, $\rho$ est la masse volumique moyenne des brins multifilamentaires en g/cm$^3$ pondérée par les titres respectifs des matériaux constitutifs des brins multifilamentaires.

8. Pneumatique (10) selon l'une quelconque des revendications précédentes, dans lequel le titre du ou des brin(s) multifilamentaire(s) de polyamide aromatique ou copolyamide aromatique est supérieur ou égal à 55 tex, de préférence supérieur ou égal à 70 tex, plus préférentiellement supérieur ou égal à 90 tex et encore plus préférentiellement supérieur ou égal à 110 tex.

9. Pneumatique (10) selon l'une quelconque des revendications précédentes, dans lequel le titre du ou des brin(s) multifilamentaire(s) de polyamide aromatique ou copolyamide aromatique est inférieur ou égal à 500 tex, de préférence inférieur ou égal à 400 tex et plus préférentiellement inférieur ou égal à 340 tex.

10. Pneumatique (10) selon l'une quelconque des revendications précédentes, dans lequel le titre du brin multifilamentaire de polyamide aliphatique est supérieur ou égal à 20 tex , de préférence supérieur ou égal à 30 tex et plus préférentiellement supérieur ou égal à 40 tex.

11. Pneumatique (10) selon l'une quelconque des revendications précédentes, dans lequel le titre du brin multifilamentaire de polyamide aliphatique est inférieur ou égal à 300 tex, de préférence inférieur ou égal à 250 tex, plus préférentiellement inférieur ou égal à 220 tex et encore plus préférentiellement inférieur ou égal à 210 tex.

12. Pneumatique (10) selon l'une quelconque des revendications précédentes, dans lequel la torsion de l'élément de renfort de carcasse (36) va de 240 à 500 tours par mètre et de préférence de 260 à 480 tours par mètre.

13. Pneumatique (10) selon l'une quelconque des revendications précédentes, dans lequel la densité d'éléments de renfort de carcasse (36) dans la nappe de carcasse crue (27) va de 60 à 140 éléments de renfort de carcasse (36) par décimètre de nappe de carcasse crue(27).

**Patentansprüche**

1. Reifen (10), der einen Felgennenndurchmesser gemäß ETRTO-Definition zwischen 24 und 54 Zoll einschließlich und ein Querschnittsverhältnis gemäß ETRTO-Definition zwischen 0,7 und 0,9 einschließlich aufweist, für ein landwirtschaftliches Fahrzeug, beinhaltend zwei Wülste (22), die jeweils mindestens eine ringförmige Verstärkungsstruktur (24) und eine Karkassenbewehrung (26), die durch ein Umschlagen um die ringförmige Verstärkungsstruktur (26) in jedem der Wülste (22) verankert ist, umfassen, wobei die Karkassenbewehrung (26) aus einer oder zwei Karkassenlagen (28) besteht, die ein oder mehrere Karkassenverstärkungselemente (36) beinhalten, wobei jedes Karkassenverstärkungselement (36) Folgendes beinhaltet:

   - eine Anordnung (37), die aus zwei Multifilamentfasern aus aromatischem Polyamid oder aromatischem Copolyamid und einer einzigen Multifilamentfaser aus aliphatischem Polyamid besteht, wobei die Fasern schraubenförmig umeinander gewickelt sind, um eine Schicht zu bilden; oder
   - eine Anordnung (37), die aus einer einzigen Multifilamentfaser aus aromatischem Polyamid oder aromatischem Copolyamid und einer einzigen Multifilamentfaser aus aliphatischem Polyamid besteht, wobei die Fasern die eine um die andere schraubenförmig umeinander gewickelt sind; oder
   - einen Kern, der aus einer ersten Multifilamentfaser aus aliphatischem Polyamid besteht, und eine Schicht, die mindestens zwei zweite Multifilamentfasern aus aromatischem Polyamid oder aromatischem Copolyamid beinhaltet, wobei die zweiten Fasern der Schicht um den Kern herum schraubenförmig umeinander gewickelt sind;
   **dadurch gekennzeichnet, dass** der Reifen (10) durch ein Verfahren erhalten wird, das einen Schritt des Fertigens jeder Karkassenlage (28) beinhaltet, bei dem das oder die Karkassenverstärkungselemente (36), die von einer Beschichtung überzogen sind, die eine Haftungsfunktion aufweist, in eine Polymerzusammensetzung getaucht werden, um jede rohe Karkassenlage (27) zu bilden, wobei das Verhältnis des Tangentenmoduls bei der durch die rohe Lage bei 7 % Dehnung entwickelten äquivalenten Kraft zu dem Sekantenmodul bei der durch die rohe Lage bei 1 % Dehnung entwickelten äquivalenten Kraft größer als oder gleich 2,00 ist, wobei die Tangenten- und Sekantenmodule anhand einer Kraft-Dehnungs-Kurve erhalten werden, die durch Anwendung der Norm ASTM D 885/D 885M - 10a von 2014 erhalten wird;
   wobei die Dichte von Karkassenverstärkungselementen (36) in der rohen Karkassenlage (27) 50 bis 150 Karkassenverstärkungselemente (36) pro Dezimeter roher Karkassenlage (27) beträgt und;
   wobei jedes Karkassenverstärkungselement (36) mit der Umfangsrichtung (Z) des Reifens (10) einen Winkel von 85° bis 95° bildet.

2. Reifen (10) nach einem beliebigen der vorhergehenden Ansprüche, wobei das Verhältnis des Tangentenmoduls bei der durch die rohe Lage bei 7 % Dehnung entwickelten äquivalenten Kraft zu dem Sekantenmodul bei der durch die rohe Lage bei 1 % Dehnung entwickelten äquivalenten Kraft kleiner als oder gleich 30,00 ist, vorzugsweise kleiner als oder gleich 27,00 ist und noch bevorzugter kleiner als oder gleich 24,00 ist.

3. Reifen (10) nach einem beliebigen der vorhergehenden Ansprüche, wobei das Verhältnis des Sekantenmoduls bei der durch die rohe Lage bei 1 % Dehnung entwickelten äquivalenten Kraft zu der Bruchkraft der rohen Karkassenlage strikt kleiner als 7,00 ist, vorzugsweise kleiner als oder gleich 5,00 ist und noch bevorzugter kleiner als oder gleich 4,00 ist.

4. Reifen (10) nach einem beliebigen der vorhergehenden Ansprüche, wobei das Verhältnis des Sekantenmoduls bei der durch die rohe Lage bei 1 % Dehnung entwickelten äquivalenten Kraft zu der Bruchkraft der rohen Karkassenlage größer als oder gleich 0,50 ist.

5. Reifen (10) nach einem beliebigen der vorhergehenden Ansprüche, wobei das Verhältnis des Tangentenmoduls bei der durch die rohe Lage bei 7 % Dehnung entwickelten äquivalenten Kraft zu der Bruchkraft der rohen Karkassenlage strikt größer als 6,00 und vorzugsweise größer als oder gleich 7,00 ist.

6. Reifen (10) nach einem beliebigen der vorhergehenden Ansprüche, wobei das Verhältnis des Tangentenmoduls bei der durch die rohe Lage bei 7 % Dehnung entwickelten äquivalenten Kraft zu der Bruchkraft der rohen Karkassenlage kleiner als oder gleich 30,00 ist, vorzugsweise kleiner als oder gleich 25,00 ist und noch bevorzugter kleiner als oder gleich 22,00 ist.

7. Reifen (10) nach einem beliebigen der vorhergehenden Ansprüche, wobei der Torsionsfaktor K des Karkassenverstärkungselements (36) strikt größer als 150 ist und vorzugsweise größer als oder gleich 180 ist, wobei K durch die folgende Formel definiert wird:

$$K = T \times [(\text{Titer} / (1000.\rho)]^{1/2}$$

wobei T die Torsion des Karkassenverstärkungselements (36), ausgedrückt in Touren pro Meter, ist, Titer die Summe der Titer der Multifilamentfasern des Karkassenverstärkungselements in tex ist, $\rho$ die mittlere Dichte der Multifilamentfasern in g/cm$^3$ ist, gewichtet durch die jeweiligen Titer der Materialien, aus denen die Multifilamentfasern bestehen.

8. Reifen (10) nach einem beliebigen der vorhergehenden Ansprüche, wobei der Titer der einen oder der mehreren Multifilamentfasern aus aromatischem Polyamid oder aromatischem Copolyamid größer als oder gleich 55 tex ist, vorzugsweise größer als oder gleich 70 tex ist, noch bevorzugter größer als oder gleich 90 tex ist und sogar noch bevorzugter größer als oder gleich 110 tex ist.

9. Reifen (10) nach einem beliebigen der vorhergehenden Ansprüche, wobei der Titer der einen oder der mehreren Multifilamentfasern aus aromatischem Polyamid oder aromatischem Copolyamid kleiner als oder gleich 500 tex ist, vorzugsweise kleiner als oder gleich 400 tex ist und noch bevorzugter kleiner als oder gleich 340 tex ist.

10. Reifen (10) nach einem beliebigen der vorhergehenden Ansprüche, wobei der Titer der Multifilamentfaser aus aliphatischem Polyamid größer als oder gleich 20 tex ist, vorzugsweise größer als oder gleich 30 tex ist und noch bevorzugter größer als oder gleich 40 tex ist.

11. Reifen (10) nach einem beliebigen der vorhergehenden Ansprüche, wobei der Titer der Multifilamentfaser aus aliphatischem Polyamid kleiner als oder gleich 300 tex ist, vorzugsweise kleiner als oder gleich 250 tex ist, noch bevorzugter kleiner als oder gleich 220 tex ist und sogar noch bevorzugter kleiner als oder gleich 210 tex ist.

12. Reifen (10) nach einem beliebigen der vorhergehenden Ansprüche, wobei die Torsion des Karkassenverstärkungselements (36) 240 bis 500 Touren pro Meter und vorzugsweise 260 bis 480 Touren pro Meter beträgt.

13. Reifen (10) nach einem beliebigen der vorhergehenden Ansprüche, wobei die Dichte von Karkassenverstärkungselementen (36) in der rohen Karkassenlage (27) 60 bis 140 Karkassenverstärkungselemente (36) pro Dezimeter roher Karkassenlage (27) beträgt.

**Claims**

1. Tyre (10) for an agricultural vehicle, comprising two beads (22) each having at least one annular reinforcing structure (24) and a carcass reinforcement (26) anchored in each of the beads (22) by a turn-up around the annular reinforcing structure (26), the carcass reinforcement (26) being made up of one or two carcass plies (28) comprising one or more reinforcing elements (36), each carcass reinforcing element (36) comprising:

   - an assembly (37) made up of two multifilament strands of aromatic polyamide or aromatic copolyamide, and of a single multifilament strand of aliphatic polyamide, the strands being wound together in a helix so as to form a layer; or
   - an assembly (37) made up of a single multifilament strand of aromatic polyamide or aromatic copolyamide, and of a single multifilament strand of aliphatic polyamide,

   the strands being wound together in a helix around one another; or

   - a core made up of a first multifilament strand of aliphatic polyamide, and a layer comprising at least two second multifilament strands of aromatic polyamide or aromatic copolyamide, the second strands of the layer being wound together in a helix around the core;
   **characterized in that** the tyre (10) is obtained by a method comprising a step of manufacturing each carcass ply (28) in which the carcass reinforcing element(s) (36) covered with a coating having an adhesive function in a polymer composition is/are embedded in order to form each uncured carcass ply (27), the ratio of the tangent modulus at the equivalent force developed by the uncured ply at 7% elongation to the secant modulus at the equivalent force developed by the uncured ply at 1% elongation being greater than or equal to 2.00, the tangent and secant moduli being obtained from a force-elongation curve obtained by applying the standard ASTM D 885/D 885M - 10a of 2014;
   wherein the density of carcass reinforcing elements (36) in the uncured carcass ply (27) ranges from 50 to 150 carcass reinforcing elements (36) per decimetre of uncured carcass ply (27); and
   wherein each carcass reinforcing element (36) makes an angle in the range from 85° to 95° with the circumferential direction Z of the tyre (10).

2. Tyre (10) according to any one of the preceding claims, wherein the ratio of the tangent modulus at the equivalent force developed by the uncured ply at 7% elongation to the secant modulus at the equivalent force developed by the uncured ply at 1% elongation is less than or equal to 30.00, preferably less than or equal to 27.00 and more preferably less than or equal to 24.00.

3. Tyre (10) according to either one of the preceding claims, wherein the ratio of the secant modulus at the equivalent force developed by the uncured ply at 1% elongation to the force at break of the uncured carcass ply is strictly less than 7.00, preferably less than or equal to 5.00 and more preferably less than or equal to 4.00.

4. Tyre (10) according to any one of the preceding claims, wherein the ratio of the secant modulus at the equivalent force developed by the uncured ply at 1% elongation to the force at break of the uncured carcass ply is greater than or equal to 0.50.

5. Tyre (10) according to any one of the preceding claims, wherein the ratio of the tangent modulus at the equivalent force developed by the uncured ply at 7% elongation to the force at break of the uncured carcass ply is strictly greater than 6.00 and preferably greater than or equal to 7.00.

6. Tyre (10) according to any one of the preceding claims, wherein the ratio of the tangent modulus at the equivalent force developed by the uncured ply at 7% elongation to the force at break of the uncured carcass ply is less than or equal to 30.00, preferably less than or equal to 25.00 and more preferably less than or equal to 22.00.

7. Tyre (10) according to any one of the preceding claims, wherein the twist factor K of the carcass reinforcing element (36) is strictly greater than 150 and preferably greater than or equal to 180, with K being defined by the formula:

$$K = T \times [(\text{Count} / (1000.\rho)]^{1/2}$$

in which T is the twist of the carcass reinforcing element (36) expressed in turns per metre, Count is the sum of the counts of the multifilament strands of the carcass reinforcing element in tex, $\rho$ is the mean mass per unit volume of the multifilament strands in g/cm$^3$ weighted by the respective counts of the constituent materials of the multifilament strands.

8. Tyre (10) according to any one of the preceding claims, wherein the count of the multifilament strand(s) of aromatic polyamide or aromatic copolyamide is greater than or equal to 55 tex, preferably greater than or equal to 70 tex, more preferably greater than or equal to 90 tex, and even more preferably greater than or equal to 110 tex.

9. Tyre (10) according to any one of the preceding claims, wherein the count of the multifilament strand(s) of aromatic polyamide or aromatic copolyamide is less than or equal to 500 tex, preferably less than or equal to 400 tex and more preferably less than or equal to 340 tex.

10. Tyre (10) according to any one of the preceding claims, wherein the count of the multifilament strand of aliphatic polyamide is greater than or equal to 20 tex, preferably greater than or equal to 30 tex and more preferably greater than or equal to 40 tex.

11. Tyre (10) according to any one of the preceding claims, wherein the count of the multifilament strand of aliphatic polyamide is less than or equal to 300 tex, preferably less than or equal to 250 tex, more preferably less than or equal to 220 tex, and even more preferably less than or equal to 210 tex.

12. Tyre (10) according to any one of the preceding claims, wherein the twist of the carcass reinforcing element (36) ranges from 240 to 500 turns per metre and preferably from 260 to 480 turns per metre.

13. Tyre (10) according to any one of the preceding claims, wherein the density of carcass reinforcing elements (36) in the uncured carcass ply (27) ranges from 60 to 140 carcass reinforcing elements (36) per decimetre of uncured carcass ply (27).

# Fig. 1

# Fig. 2

Fig. 3

Fig. 4

Fig. 5

48

46

47

Fig. 6

Fig. 7

# Fig. 8

**EP 4 100 264 B1**